# DEMANDE DE BREVET EUROPEEN

(11) **EP 3 489 207 A1**
(43) Date de publication de la demande: **29.05.2019**
(21) Numéro de dépôt: 18171491.6
(22) Date de dépôt: 09.05.2018
(51) Int. Cl.: C04B 41/00, C04B 41/50, C04B 41/65

(54) **ENDUIT DE PROTECTION THERMIQUE, PROCEDE D'OBTENTION D'UN TEL ENDUIT ET MISES EN OEUVRE**

(30) Priorité: 24.11.2017 EP 17203674
(71) Demandeur: Davoudi, Farhooman, 77680 Roissy En Brie (FR)
(72) Inventeur: Davoudi, Farhooman, 77680 Roissy En Brie (FR)
(74) Mandataire: Argyma

(57) **Abrégé**

La présente invention a pour objet un enduit (12) de collage et de protection thermique comprenant une base de colle ou de mastic comprenant au moins un élément minéral réfractaire, ledit enduit intégrant une quantité de microcapsules contenant de l'eau ou de cristaux saturés d'eau.

La présente invention vise également un procédé de réalisation d'un enduit de collage et de protection thermique comprenant les étapes suivantes :
- la dilution jusqu'à saturation d'un mélange de cristaux de chlorure de sodium et de cristaux de bicarbonate de sodium dans de l'eau,
- la dilution d'une quantité de cristaux de chlorure de sodium saturés d'eau et de cristaux de bicarbonate de sodium saturés d'eau dans une base de colle ou de mastic réfractaire, comprenant au moins un élément minéral réfractaire, pour obtenir un enduit de collage et de protection thermique, de préférence de façon à ce que l'eau saturée de cristaux représente 10% à 30% en masse de l'enduit (12).

## Description

### DOMAINE TECHNIQUE ET OBJET DE L'INVENTION

L'invention concerne le domaine de la protection thermique. Plus précisément, la présente invention vise un enduit de protection thermique, formant une barrière thermique applicable sur différents support, notamment sur des panneaux sandwiches destinés à constituer des cloisons.

L'enduit selon l'invention peut être avantageusement appliqué sur d'autres supports, notamment des tubes ou des canalisations.

### ETAT DE LA TECHNIQUE

La problématique générale concerne la protection thermique. En premier lieu, dans le domaine de la construction, des panneaux sandwiches à base de silicate de calcium sont couramment utilisés, notamment pour leur qualité d'isolation thermique vis-à-vis de hautes températures. En cas d'incendie dans une pièce séparée d'une autre pièce par un tel panneau, il est souhaitable que ledit panneau, d'une part, présente une bonne tenue mécanique pendant une durée la plus étendue possible et, d'autre part, qu'il agisse comme une barrière thermique évitant l'élévation rapide de la température dans la pièce adjacente et empêchant la propagation du feu.

Ainsi, les panneaux sandwiches de l'état de l'art, comme cela est connu, destinés à une fonction d'isolation dans des environnements de haute température, sont principalement constitués de silicate de calcium.

Ce type de panneau est conçu selon le principe dit du « panneau sandwich », formé de plusieurs couches, dont une base en silicate de calcium avec, de chaque côté, une couche de colle et une plaque de décor - ou parement - pour l'aspect esthétique et pour « isoler » le silicate de calcium qui est un matériau très corrosif. En cas d'incendie notamment, ou de présence d'une source de chaleur intense quelconque d'un côté du panneau, la chaleur est transmise d'une couche à l'autre, jusqu'à l'autre côté du panneau.

La présente invention se situe par conséquent dans le domaine de la mise au point de produits réfractaires, étant entendu que l'on entend par « réfractaire » la capacité d'un produit à résister à la chaleur, c'est-à-dire aux effets induits par les hautes températures. Par définition, un matériau réfractaire présente une température de fusion élevée.

Dans l'état de la technique, même avec des colles dites réfractaires, lorsque la température atteint environ 200°C, la tenue mécanique du panneau est fortement dégradée. La chaleur transmise de l'autre côté du panneau permet une propagation de l'incendie éventuel.

Dans l'état de l'art, les panneaux à base de silicate de calcium sont soit de basse densité, soit de haute densité. Lorsqu'ils sont de basse densité, les panneaux en silicate de calcium comprennent des microbulles d'air et présentent une masse volumique de l'ordre de 230 kg/m³. Lorsqu'ils sont de haute densité, les panneaux en silicate de calcium sont plus compacts et présentent une masse volumique de l'ordre de 600 kg/m³ à 800 kg/m³.

En règle générale, les panneaux en silicate de calcium de basse densité sont un meilleur bouclier thermique, mais ils présentent l'inconvénient d'être très cassants et fragiles. Les panneaux en silicate de calcium de haute densité, en revanche, présente une conductivité thermique plus élevée et constituent par conséquent un moins bon bouclier thermique, même si leur haute densité les rend résistants à la traversée de flamme.

Pour améliorer les qualités des panneaux en silicate de calcium de basse densité, il est connu, d'une part, de travailler à la modification de leur structure cristalline, notamment de manière à maîtriser au mieux la taille et la répartition des microbulles d'air dans la masse des panneaux, dans le but de contrôler leur qualité de bouclier thermique. Le silicate de calcium n'est en fait pas, en tant que tel, un matériau réfractaire.

Une autre solution connue consiste à intégrer dans la masse des panneaux en silicate de basse densité, lors de leur fabrication, des fibres en mélange de minéraux réfractaires, comme de la laine de roche.

Ces fibres ont pour fonction d'augmenter la résistance mécanique des panneaux pour les rendre moins fragiles et cassants lors de manipulations.

La masse volumique de tels panneaux en silicate de calcium de basse densité enrichis en fibres en matériaux minéraux augmente à environ 260-290 kg/m³. Ces panneaux restent cependant très cassants.

Outre leur mauvaise performance en tant que bouclier thermique, les panneaux en silicate de calcium de haute densité présente l'inconvénient d'être très lourds, ce qui est préjudiciable dans le cadre d'une utilisation pour des cloisons de séparation dans des bâtiments terrestres ou marines par exemple.

Qu'ils soient de basse densité ou de haute densité, enrichis au moyen de fibres en minéraux réfractaires ou non, les panneaux en silicate de calcium connus présentent des performances limitées en matière de bouclier thermique, insuffisantes pour certaines applications.

En outre, il est à noter que cette problématique ayant trait à la fonction de bouclier thermique peut être déclinée à d'autres objets que des panneaux en silicate de calcium, puisque des tubes, des canalisations, par exemple en plastique, ou des panneaux en bois, sont également, dans certains cas, candidats à voir s'améliorer leur capacité à assurer une fonction de bouclier thermique.

Il existe donc un besoin pour un traitement, tel qu'un enduit, à appliquer sur la (les) surface(s) d'un panneau composite, par exemple en silicate de calcium, ou sur la paroi interne et/ou externe d'une canalisation par exemple, pour en améliorer la qualité de bouclier thermique.

La solution recherchée se veut par ailleurs aisée à mettre en oeuvre et économiquement compétitive.

Dans ce but, pour améliorer la fonction de barrière thermique, et donc de barrière anti-feu, de différents produits, en particulier de panneaux à base de silicate de calcium, la présente invention propose l'intégration à ces produits d'un retardateur thermique.

Pour cela, on fabrique un enduit à appliquer sur lesdits produits, dont l'épaisseur et la composition sont adaptables à un objectif de résistance thermique.

La présente invention vise ainsi un enduit de collage et de protection thermique, comprenant une base de colle de de mastic comprenant au moins un élément minéral réfractaire, ledit enduit intégrant par ailleurs une certaine quantité de cristaux, ou de microcapsules, renfermant un liquide, en particulier de l'eau.

Lesdits cristaux ou lesdites microcapsules fixent de l'eau au niveau de la surface enduite. Sous l'effet d'une forte chaleur, due par exemple à un incendie, lesdits cristaux ou lesdites microcapsules sont configurés pour libérer l'eau, progressivement.

Tant qu'il y a de l'eau dans l'enduit, la température du côté non exposé à la source de forte chaleur se stabilise, typiquement à une température inférieure à 100 °C, pendant une durée pouvant atteindre et dépasser plusieurs dizaines de minutes en fonction de l'épaisseur de la couche d'enduit apposée et de la proportion de cristaux ou de microcapsules diluée dans ledit enduit.

### PRESENTATION GENERALE DE L'INVENTION

A cet effet, plus précisément, l'invention vise un enduit de collage et de protection thermique comprenant une base de colle ou de mastic réfractaire, comprenant au moins un élément minéral réfractaire, ledit enduit intégrant une quantité de microcapsules contenant de l'eau ou de cristaux saturés d'eau.

Grâce à l'enduit selon l'invention, appliqué sur un produit tel qu'un panneau destiné à former une cloison, une canalisation, etc., on obtient un produit dont la capacité à assurer une fonction de bouclier thermique est améliorée.

Avantageusement, l'enduit comprend un mélange de cristaux de chlorure de sodium saturés d'eau et de carbonate de sodium saturés d'eau.

Selon un mode de réalisation, l'enduit comprend entre 10% et 30% en masse d'un mélange comprenant 50% en masse de cristaux de chlorure de sodium saturés d'eau et 50% en masse de cristaux de bicarbonate de sodium saturés d'eau.

Selon un mode de réalisation, l'enduit comprend par ailleurs des fibres en matériaux minéraux, tel que des fibres de laine de roche ou des fibres de laine de verre.

Selon un mode de réalisation, l'enduit comprend entre 5% et 20% en masse de fibres en laine de roche et/ou de fibres en laine de verre.

Selon un mode de réalisation, l'enduit comprend par ailleurs des billes de polystyrène expansé incorporées ou des bulles de gaz injectées, le gaz pouvant par exemple de l'air ou du CO₂.

La présente invention vise également un procédé de réalisation d'un enduit de collage et de protection thermique comprenant les étapes suivantes :
- la dilution jusqu'à saturation d'un mélange de cristaux de chlorure de sodium et de cristaux de bicarbonate de sodium dans de l'eau,
- la dilution d'une quantité de cristaux de chlorure de sodium saturés d'eau et de cristaux de bicarbonate de sodium saturés d'eau dans une base de colle ou de mastic réfractaire, comprenant au moins un élément minéral réfractaire, pour obtenir un enduit de collage et de protection thermique, de préférence de façon à ce que les cristaux de chlorure de sodium saturés d'eau et les cristaux de bicarbonate de sodium saturés d'eau représentent 10% à 30% en masse de l'enduit.

Selon un mode de réalisation, le mélange de cristaux de chlorure de sodium et de cristaux de bicarbonate de sodium comprend 50% en masse de cristaux de chlorure de sodium et 50% en masse de cristaux de bicarbonate de sodium.

Selon un mode de réalisation, le procédé comprend par ailleurs l'incorporation dans l'enduit de fibres en laine de roche et/ou en laine de verre, de préférence de façon à ce que lesdites fibres en laine de roche et/ou en laine de verre représentent 5% à 20% en masse de l'enduit.

Selon un mode de réalisation, le procédé comprend par ailleurs l'incorporation de billes de polystyrène expansé ou l'injection des bulles de gaz dans l'enduit, le gaz pouvant par exemple de l'air ou du CO₂.

L'intégration de billes de polystyrène ou de bulles de gaz dans l'enduit permet d'augmenter le volume de l'enduit et améliore la capacité du produit comprenant l'enduit à assurer une fonction d'isolation phonique.

La présente invention vise aussi un panneau sandwich comprenant une tranche de silicate de calcium, de préférence de faible densité, inférieure à 260 kg/m3, et sur chaque surface externe de ladite tranche, une couche de primaire configuré pour boucher les pores de ladite tanche en silicate de calcium et comprenant un mélange de cristaux de chlorure de sodium saturés d'eau et de cristaux de carbonate de sodium saturés d'eau, chaque couche de primaire étant recouverte d'une couche d'enduit de collage et de protection thermique tel que brièvement décrit ci-dessus.

Avantageusement, le primaire comprend 5% en masse du mélange de cristaux de chlorure de sodium saturés d'eau et de cristaux de carbonate de sodium saturés d'eau.

Selon un mode de réalisation, le panneau sandwich comprend par ailleurs un support de maintien perforé, de préférence une plaque en tôle perforée, collée de chaque côté dudit panneau sur la couche d'enduit de collage et de protection thermique.

Selon un mode de réalisation, le panneau sandwich comprend par ailleurs une plaque de décor collée, de chaque côté dudit panneau, sur le support de maintien perforé.

La présente invention vise en outre une portion de canalisation comprenant un tube en niobium dont la paroi interne et/ou la paroi externe est recouverte d'une couche d'enduit de collage et de protection thermique tel que brièvement décrit ci-dessus.

Avantageusement, ladite portion de canalisation, dont seule la paroi externe est recouverte d'une couche d'enduit de collage et de protection thermique, comprend par ailleurs un tube en tôle perforée collé sur ladite couche d'enduit de collage et de protection thermique.

### DESCRIPTION DES FIGURES

L'invention sera mieux comprise à la lecture de la description qui va suivre, donnée uniquement à titre d'exemple, et se référant aux dessins annexés sur lesquels :
- la figure 1 montre une vue éclatée d'un panneau sandwich comprenant une couche d'enduit selon l'invention,
- la figure 2 montre une vue d'un panneau sandwich comprenant une couche d'enduit selon l'invention, après avoir été soumis à une forte source de chaleur,
- la figure 3 montre une portion de canalisation comprenant une couche d'enduit selon l'invention,
- la figure 4 montre des courbes de la température au verso d'un panneau sandwich comprenant une couche d'enduit selon l'invention et dont la face recto est soumise à une forte source de chaleur,
- la figure 5 montre une couche d'enduit selon l'invention, comprenant des billes de polystyrène expansé incorporées.

### DESCRIPTION DETAILLEE DE L'INVENTION

L'invention est présentée principalement pour une application dans le domaine des panneaux sandwiches à base de silicate de calcium. Cependant, d'autres applications sont visées par la présente invention. En particulier, l'application d'enduit selon l'invention sur des tubes ou des canalisations, notamment à des fin de transport de liquide très chaud ou très froid, par exemple de l'aluminium liquide, est également prévue. L'enduit selon l'invention peut être apposé sur différents produits et matériaux (bois, plastique, métal, etc.)

La présente invention concerne de fait, en premier, un enduit de collage et de protection thermique destiné à recouvrir un produit, par exemple un panneau en silicate de calcium, afin d'en améliorer la capacité à former une barrière thermique, notamment dans un objectif de réaliser une fonction coupe-feu en cas d'incendie.

### Procédé de fabrication de l'enduit de collage et de protection thermique :

On utilise une base de colle ou de mastic dit réfractaire, comprenant au moins un élément minéral réfractaire, et configuré pour ne pas brûler jusqu'à de hautes températures, telles que des températures allant de 800 °C à 1500 °C. On peut par exemple utiliser une telle colle réfractaire de marque Rubson® ou un mastic réfractaire de marque Ayrton®.

Ces colles et mastics réfractaires ont généralement une base de silicate de soude.

Ce type de colles et mastics réfractaires ne peuvent cependant pas être utilisés directement sur des panneaux en silicate de calcium car ces derniers absorberaient l'eau contenue dans la colle ou le mastic, dégradant de fait les capacités de tenue mécanique desdits panneaux.

Des tests montent que l'application de tels colles ou mastics réfractaires n'améliorent pas directement les qualités de panneaux en silicate de calcium en tant que bouclier thermique.

Selon l'invention, des cristaux ou des microcapsules renfermant du liquide, en particulier de l'eau, sont intégrés à une base de colle ou de mastic réfractaire.

Selon un mode de réalisation, on dilue dans de l'eau, jusqu'à saturation, un mélange à 50/50 en poids de cristaux de chlorure de sodium (NaCI) et de bicarbonate de sodium (NaHCO₃).

Selon des modes de réalisations alternatifs, un seul de ces deux cristaux ou un mélange dans des proportions différentes de ces cristaux ou encore d'autres cristaux peuvent également être utilisés.

Autrement dit, on réalise une dilution s'écrivant :

(NaHCO₃ + H₂O) + (NaCI) + H₂O).

Il est à noter qu'un avantage de l'invention réside dans le fait que la colle ou le mastic réfractaire, tout comme les cristaux de chlorure de sodium ou de bicarbonate de sodium, sont aisés à se procurer et peu chers.

Selon l'invention, les cristaux saturés d'eau sont ensuite intégrés à la base de colle ou de mastic réfractaire.

De préférence, on intègre 10% à 30% en poids de cristaux saturés d'eau dans la base de colle ou de mastic réfractaire.

Les cristaux intégrés à la base de colle ou de mastic réfractaire fixent de l'eau dans l'enduit ainsi obtenu, qui peut être appliqué sur un produit, par exemple un panneau en silicate de calcium.

Cette eau est libérée progressivement en cas d'élévation de la température, par exemple à cause d'un incendie. L'eau ainsi libérée améliore la capacité du produit à agir comme un bouclier thermique.

Pour minimiser la porosité de l'enduit, ainsi que pour augmenter sa tenue mécanique, des fibres en matériaux réfractaires, tels que des matériaux minéraux réfractaires ou des fibres en céramique réfractaires, peuvent être intégrées à l'enduit.

Par exemple, des fibres en laine de roche ou en laine de verre peuvent être, selon un mode de réalisation, mélangées à l'enduit pour l'enrichir et le renforcer, le cas échéant.

La teneur en fibres en matériaux minéraux réfractaires peut être adaptée en fonction des objectifs poursuivis. Par exemple, l'enduit sera chargé de fibres minérales de type laine de roche à environ 7% en masse, notamment en vue d'être utilisé pour le collage de plaques de décor des panneaux sandwich, comme cela est décrit dans les exemples de mise en oeuvre ci-après.

Selon un autre mode de réalisation, l'enduit peut être utilisé seul, c'est-à-dire sans plaque de décor à coller par-dessus, et sera par exemple chargé de 10% à 12% de fibres minérales de type laine de roche.

Selon un autre mode de réalisation, l'enduit est destiné à être appliqué pour la jonction de panneaux sandwiches entre eux. L'enduit sera alors par exemple chargé d'environ 15% de fibres de laine de verre, qui présente de très bonnes caractéristiques de solidité dans ce contexte, et d'environ 5% de fibres de laine de roche.

D'autres modes de réalisation sont prévus, notamment pour renforcer la fonction de barrière thermique d'un produit recouvert de l'enduit selon l'invention, à basse température, c'est-à-dire à des températures inférieures à 100° C, autrement dit en l'absence d'incendie. Selon un mode de réalisation, on expanse à cette fin l'enduit en y injectant des bulles de gaz, par exemple d'air ou de CO₂. Selon un autre mode de réalisation, toujours dans ce but, on incorpore dans l'enduit des billes de polystyrène expansé. L'intégration de bulles de gaz ou de billes de polystyrène expansé dans l'enduit permet par ailleurs d'améliorer la capacité du produit comprenant l'enduit à assurer une fonction d'isolation phonique.

Dans les exemples décrits ci-dessus, on dilue environ 10% de cristaux saturés d'eau dans la base de colle ou de mastic réfractaire.

L'enduit ainsi obtenu peut être appliqué, par exemple, sur chaque face d'un panneau en silicate de calcium, sur la paroi interne et/ou externe d'un tube ou d'une canalisation, afin d'en augmenter la capacité à agir comme bouclier thermique.

S'agissant de l'application de l'enduit obtenu sur une surface d'un panneau en silicate de calcium, on recourt de préférence à l'application préalable d'un primaire, formant une sous-couche à l'enduit.

Un primaire réfractaire est ainsi mis au point, conformément à l'invention, selon une technique similaire. Un primaire universel, constituant d'une couche de fond silicatée et sableuse par exemple, sert de base à laquelle est intégrée, comme pour l'enduit, un mélange de cristaux de chlorure de sodium et de bicarbonate de sodium saturés d'eau, à 50/50 en masse. Comme pour l'enduit, d'autres cristaux ou d'autres proportions peuvent être utilisés. Ces cristaux saturés d'eau rendent le primaire réfractaire, de façon similaire au phénomène physique mis en oeuvre dans l'enduit selon l'invention.

De préférence, dans le primaire, on intègre 1% à 5% en masse de cristaux saturés d'eau.

Un tel primaire réfractaire assure trois fonctions principales. D'abord, il bouche les pores de la tranche de silicate de calcium du panneau afin d'éviter toute absorption d'eau par ce dernier. Ensuite, grâce aux cristaux saturés d'eau qu'il comprend, il assure une fonction d'amélioration de la qualité de bouclier thermique du panneau. Enfin, grâce aux cristaux contenus dans le primaire appliqué en couche fine de quelques microns, la couche d'enduit apposée par-dessus accroche de façon améliorée. En effet, les cristaux intégrés au primaire constituent des aspérités favorisant l'accroche de l'enduit appliqué par-dessus.

### Fonction de bouclier thermique, notamment en cas d'incendie :

D'un point de vue physique, les phénomènes mis en oeuvre pour améliorer la capacité d'un produit, tel qu'un panneau, recouvert de l'enduit selon l'invention, à assurer une fonction de bouclier thermique, sont décrits ci-après.

Comme décrit précédemment, la présente invention comprend la dilution, dans une base de colle ou de mastic réfractaire, de cristaux ou de microcapsules emprisonnant un liquide, par exemple de l'eau.

Selon un mode de réalisation préféré, un mélange de cristaux de chlorure de sodium et de bicarbonate de sodium saturés d'eau est incorporé à ladite base de colle ou de mastic réfractaire.

Après avoir été introduits dans de l'eau jusqu'à saturation, ces cristaux, en séchant, emprisonne l'eau et la fixe dans l'enduit.

Le bicarbonate de sodium présente une température de fusion à 270°C ; il se décompose à partir de 50°C en relâchant de la vapeur eau et du CO₂ gazeux.

De ce fait, lorsque le produit recouvert de l'enduit selon l'invention est soumis à une intense source de chaleur, par exemple à cause d'un incendie, les cristaux de bicarbonate de sodium libèrent l'eau qu'ils contiennent et se décomposent en libérant de la vapeur d'eau et du CO₂ gazeux. Les cristaux de chlorure de sodium libèrent également l'eau qu'ils emprisonnaient.

Il se crée par conséquent dans l'enduit, qui gonfle, des cavités emplies de vapeur d'eau et de CO₂ gazeux. Ces cavités emplies de vapeur d'eau et de CO₂ forment une barrière thermique efficace.

Dans le cas où l'enduit comporte également des fibres en matériaux minéraux, en particulier des fibres en laine de de roche, ces dernières gonflent également sous l'effet de la chaleur, et s'avance vers la source de chaleur, par exemple les flammes, de telle sorte qu'elles en retardent les effets également.

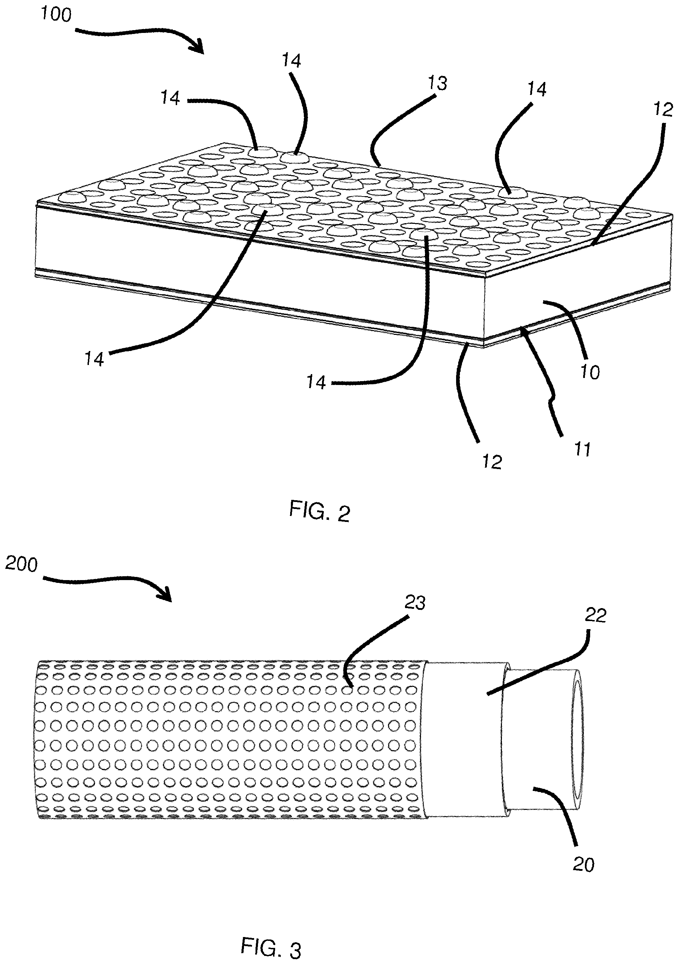

Le gonflement de l'enduit selon l'invention est représenté à la figure 2, décrite dans le détail ci-après.

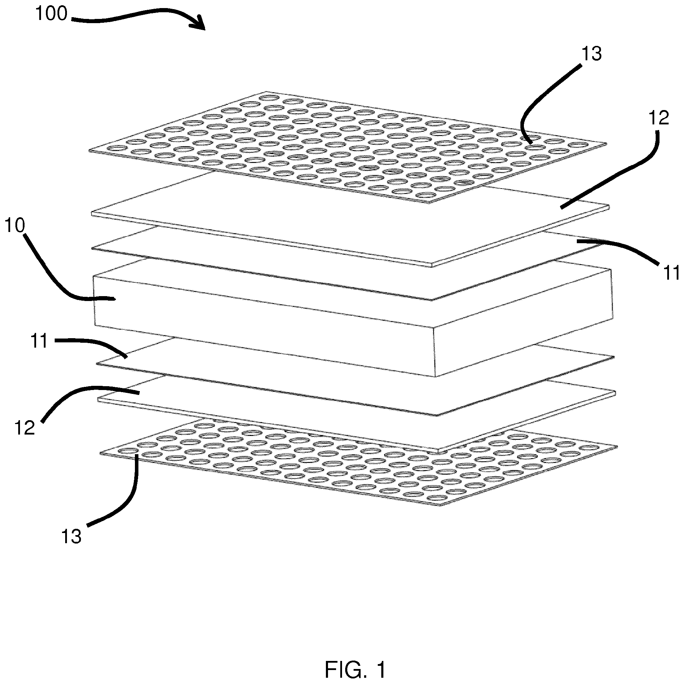

Des tests ont été effectués sur des panneaux tels que schématiquement représentés à la figure 1.

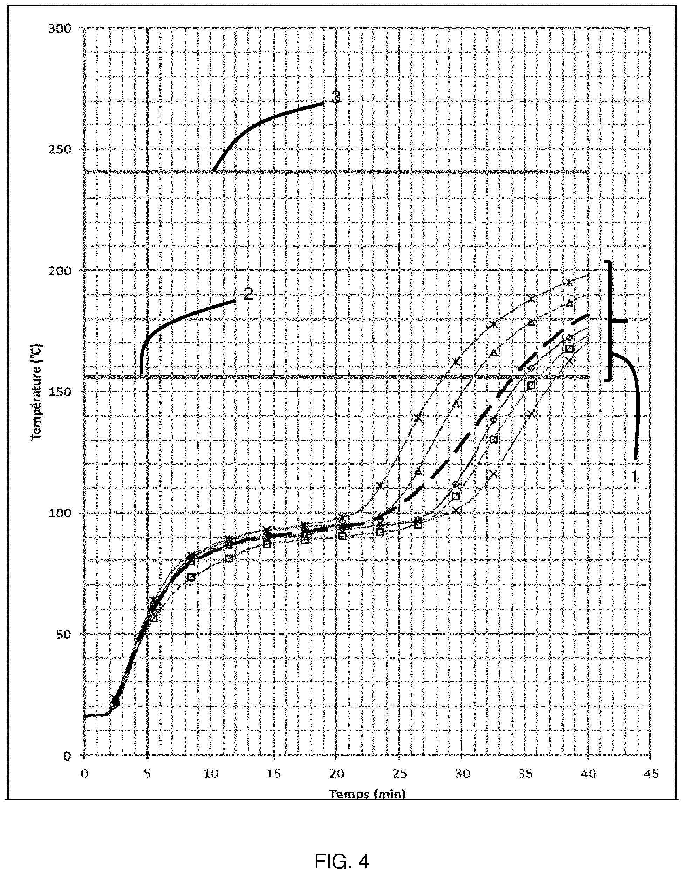

La figure 4 montre des courbes 1 d'évolution de la température de l'autre côté d'un tel panneau 100 par rapport à une source de chaleur intense (900°C). Les différentes courbes 1 montrent une pluralité de tests réalisés avec des teneurs différents en cristaux dans l'enduit et avec des épaisseurs légèrement différentes d'enduit appliqué sur les panneaux 100 testés.

Ladite température augmente jusqu'à un plancher à une température inférieure à 100°C où la température se stabilise pendant plus de 30 minutes. Sur la figure 4, on constate un pallier horizontal entre la 8^{ème} minute et la 25^{ème} minute du test.

Au-delà de cette durée, l'eau qui avait été intégrée, via les cristaux, dans l'enduit, a totalement été consommée, évaporée, et la température augmente plus rapidement. La courbe 3 représente le différentiel entre la température ambiante, soit 16°C, et la température maximale atteinte, soit 256°C, côté verso, après 40 minutes d'exposition de la face recto à la source de chaleur (900°C). La courbe 2 représente le différentiel de température moyen, soit 140°C.

Pendant toute cette durée, la tenue mécanique des panneaux a persisté. En outre, il est à noter que la chaleur ne s'est pas diffusée non plus, du côté chauffé. Ainsi, la température en des points du côté exposé à la source de chaleur éloignés du point normal à ladite source de chaleur ont vu leur température rester significativement inférieure à celle dudit point normal.

Ainsi, les tests montrent la qualité très élevée de l'enduit selon l'invention en tant que bouclier thermique. En effet les cavités emplies de vapeur d'eau et de CO₂ libérés par les cristaux intégrés à l'enduit assurent une fonction de barrière thermique efficace.

Plus précisément, l'enduit selon l'invention forme une barrière efficace aux infrarouges, et donc une barrière de protection thermique efficace, aussi bien vis-à-vis de très hautes températures que vis-à-vis de très basses températures.

### Exemples de mises en oeuvre :

En référence à la figure 1, sur un panneau 100 basé sur une tranche 10 en silicate de calcium, par exemple d'une épaisseur de 25 mm, on applique, sur chaque face, une couche de primaire 11 réfractaire, élaboré selon la méthode décrite ci-dessus. La couche de primaire 11 présente de préférence une épaisseur de quelques microns.

Sur cette couche de primaire réfractaire 11, on applique une couche 12 d'enduit obtenue conformément au procédé d'obtention selon l'invention. La couche de primaire 11 présente une épaisseur inférieure à 1 mm, typiquement de quelques microns. La couche d'enduit 12 présente de préférence une épaisseur comprise entre 2 mm et 10 mm, notamment entre 3 mm et 5 mm.

En pratique, l'épaisseur de la couche d'enduit 12, de même que sa teneur en cristaux saturés d'eau, sont adaptables et configurés pour atteindre un objectif de capacité donnée à assurer une fonction de bouclier thermique.

Toujours en référence à la figure 1, qui montre un panneau 100 basé sur une tranche 10 en silicate de calcium recouverte d'une sous-couche de primaire 11 et d'une couche d'enduit 12, il est également représenté, conformément à un mode de réalisation, une couche externe de support de maintien 13, constituée par exemple d'une tôle perforée en acier. La tôle perforée 13 présente par exemple une épaisseur comprise entre 0,5 mm et 5 mm. La tôle perforée 13 assure d'abord une fonction de support de maintien, et également de renfort.

Sur cette tôle perforée 13 peut ensuite être disposée une plaque de décor quelconque (non représentée), par exemple en plastique.

Le mode de réalisation dans lequel il est prévu une couche de tôle perforée 13 entre l'enduit 12 et la plaque de décor (non représentée) présente un double avantage.

D'abord, comme expliqué précédemment, lorsque le produit, par exemple le panneau 100, est soumis à une forte élévation de la chaleur, par exemple à cause d'un incendie, l'enduit 12 gonfle en raison des cavités qui se forment en son sein, de sorte que, en l'absence de la tôle perforée 13, la plaque de décor risquerait de se décoller.

Un autre avantage réside dans le fait que la présence des perforations guide le gonflement de l'enduit et favorise la tenue mécanique du panneau 100, comme le montre la figure 2.

En effet les « bulles » 14 induites par le gonflement de l'enduit 12, dans lequel apparaissent des cavités emplies de vapeur d'eau et de CO₂, s'engagent dans les perforations de la tôle perforée 13, coopérant avec ces dernières pour participer au maintien du panneau 100.

Selon un autre mode de réalisation non représenté, un panneau de type sandwich peut également être constitué de plusieurs couches de silicate de calcium entre lesquelles est appliquée une couche d'enduit selon l'invention et, le cas échéant, de part et d'autre de la couche d'enduit prise en sandwich, une couche de primaire conforme à l'invention, déposée sur la couche de silicate de calcium. Les faces externes d'un tel panneau sandwich comportement, comme le panneau 100, avec une couche de primaire, une couche d'enduit, une couche de tôle perforée et, le cas échant, une plaque de décor. Un tel panneau présente une résistance améliorée et une meilleure capacité à assurer la fonction de bouclier thermique.

Selon un autre mode de réalisation (non représenté), par ailleurs, on peut disposer, en couches successives, sur la tranche en silicate de calcium, une tôle perforée, puis une couche d'enduit, puis une tôle perforée.

La figure 3 montre un tube ou une portion de canalisation traité conformément à l'invention de façon à améliorer sa capacité à assurer une fonction de bouclier thermique. Le tube 200 présente par exemple une base 20 en niobium. Cette base 20 est recouverte d'une couche de quelques millimètres d'enduit 22 et enveloppée d'une tôle perforée 23.

Le fonctionnement est identique à celui décrit précédemment en regard du mode de réalisation portant sur un panneau 100.

Un tel tube en niobium recouvert d'enduit permet par exemple le transport de liquide à très haute température, comme des métaux liquides.

Il est précisé que la présente invention est susceptible d'adaptations à la portée de l'homme de l'art. Les exemples détaillés d'utilisation de l'enduit de protection thermique selon l'invention sont donnés à titre illustratif uniquement. L'enduit selon l'invention peut ainsi être appliqué sur de nombreux produits et de nombreux matériaux. Par exemple, l'enduit peut être appliqué sur des surfaces en plastique ou en bois.

Une utilisation de l'invention dans le domaine de l'aéronautique est notamment visée. L'enduit selon l'invention est alors appliqué sur les cloisons de soutes à bagages par exemple.

Une utilisation de l'invention dans le domaine des compartiments de protection contre les incendies est également visée. L'enduit selon l'invention est alors appliqué sur les panneaux formant les cloisons de tels compartiments.

Pour améliorer la capacité d'un produit comprenant l'enduit selon l'invention à assurer une fonction de barrière thermique à des températures inférieures à 100°C, y compris à des températures négatives en degrés Celsius, il est prévu de compléter la composition de l'enduit. En particulier, il est prévu d'expanser l'enduit en y injectant des bulles de gaz, notamment des bulles d'air ou de CO₂.

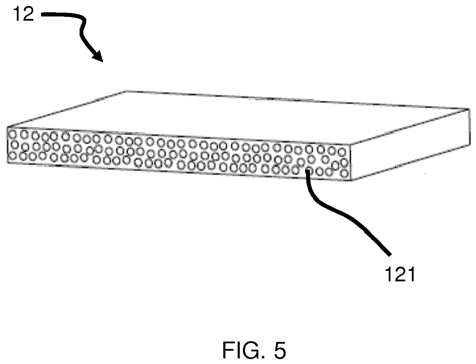

Selon un autre mode de réalisation, représenté à la figure 5, il est prévu d'incorporer à l'enduit 12 des billes de polystyrène expansé 121.

Dans ce dernier cas, la présence des billes de polystyrène 121 améliore l'isolation thermique réalisée par le produit comprend l'enduit 12, notamment à des températures inférieures à 0°C. En cas de forte chaleur ou d'incendie, le polystyrène se transforme en gaz à environ 120°C, générant des cavités emplies de gaz dans l'enduit, renforçant la capacité du produit à assurer une fonction de bouclier thermique.

## Revendications

1. Enduit (12) de collage et de protection thermique comprenant une base de colle ou de mastic réfractaire, comprenant au moins un élément minéral réfractaire, ledit enduit intégrant une quantité de microcapsules contenant de l'eau ou de cristaux saturés d'eau.

2. Enduit (12) selon la revendication 1, dans lequel l'enduit comprend un mélange de cristaux de chlorure de sodium saturés d'eau et de carbonate de sodium saturés d'eau.

3. Enduit (12) selon la revendication précédente, comprenant entre 10% et 30% en masse d'un mélange comprenant 50% en masse de cristaux de chlorure de sodium saturés d'eau et 50% en masse de cristaux de bicarbonate de sodium saturés d'eau.

4. Enduit (12) selon l'une des revendications précédentes, comprenant par ailleurs des fibres en matériaux minéraux, tel que des fibres de laine de roche ou des fibres de laine de verre.

5. Enduit (12) selon la revendication précédente, comprenant entre 5% et 20% en masse de fibres en laine de roche et/ou de fibres en laine de verre.

6. Enduit (12) selon l'une des revendications précédentes, comprenant par ailleurs des billes de polystyrène expansé (121) incorporées ou des bulles de gaz injectées, le gaz pouvant par exemple de l'air ou du CO₂.

7. Procédé de réalisation d'un enduit (12) de collage et de protection thermique comprenant les étapes suivantes :
- la dilution jusqu'à saturation d'un mélange de cristaux de chlorure de sodium et de cristaux de bicarbonate de sodium dans de l'eau,
- la dilution d'une quantité de cristaux de chlorure de sodium saturés d'eau et de cristaux de bicarbonate de sodium saturés d'eau dans une base de colle ou de mastic réfractaire, comprenant au moins un élément minéral réfractaire, pour obtenir un enduit (12) de collage et de protection thermique, de préférence de façon à ce que les cristaux de chlorure de sodium saturés d'eau et les cristaux de bicarbonate de sodium saturés d'eau représentent 10% à 30% en masse de l'enduit (12).

8. Procédé selon la revendication précédente, dans lequel le mélange de cristaux de chlorure de sodium et de cristaux de bicarbonate de sodium comprend 50% en masse de cristaux de chlorure de sodium et 50% en masse de cristaux de bicarbonate de sodium.

9. Procédé selon la revendication 7 ou 8, comprenant par ailleurs l'incorporation dans l'enduit (12) de fibres en laine de roche et/ou en laine de verre, de préférence de façon à ce que lesdites fibres en laine de roche et/ou en laine de verre représentent 5% à 20% en masse de l'enduit (12).

10. Panneau sandwich (100) comprenant une tranche (10) de silicate de calcium, de préférence de faible densité, inférieure à 260 kg/m3, et sur chaque surface externe de ladite tranche (10), une couche de primaire (11) configuré pour boucher les pores de ladite tanche (10) en silicate de calcium et comprenant un mélange de cristaux de chlorure de sodium saturés d'eau et de cristaux carbonate de sodium saturés d'eau, chaque couche de primaire (11) étant recouverte d'une couche d'enduit (12) de collage et de protection thermique selon l'une quelconque des revendications 1 à 6.

11. Panneau sandwich (100) selon la revendication précédente, dans lequel le primaire (11) comprend 5% en masse du mélange de cristaux de chlorure de sodium saturés d'eau et de cristaux de carbonate de sodium saturés d'eau.

12. Panneau sandwich (100) selon la revendication 10 ou 11, comprenant par ailleurs un support de maintien perforé (13), de préférence une plaque en tôle perforée (13), collée de chaque côté dudit panneau (100) sur la couche d'enduit (12) de collage et de protection thermique.

13. Panneau sandwich (100) selon la revendication précédente, comprenant par ailleurs une plaque de décor collée, de chaque côté dudit panneau (100), sur le support de maintien perforé (13).

14. Portion de canalisation (200) comprenant un tube en niobium (20) dont la paroi interne et/ou la paroi externe est recouverte d'une couche d'enduit (22) de collage et de protection thermique selon l'une des revendications 1 à 6.

15. Portion de canalisation (200) selon la revendication précédente, dont seule la paroi externe est recouverte d'une couche d'enduit (22) de collage et de protection thermique, un tube en tôle perforée (23) étant par ailleurs collé sur ladite couche d'enduit (22) de collage et de protection thermique.
